# FASCICULE DE BREVET EUROPEEN

(11) **EP 3 146 386 B1**
(45) Date de publication et mention de la délivrance du brevet: **18.12.2019**
(21) Numéro de dépôt: 15738843.0
(22) Date de dépôt: 22.05.2015
(51) Int. Cl.: G02F 1/1347, G02B 27/22

(54) **DISPOSITIF D'OBTURATION ÉLECTRO-OPTIQUE À DOUBLE MODE D'ATTÉNUATION**
VORRICHTUNG ZUR ELEKTROOPTISCHEN BLOCKIERUNG MIT DOPPELDÄMPFUNGSMODUS
ELECTRO-OPTICAL BLOCKING DEVICE WITH DOUBLE ATTENUATION MODE

(30) Priorité: 22.05.2014 FR 1454634
(43) Date de publication de la demande: 29.03.2017
(73) Titulaire: INSTITUT MINES TELECOM / TELECOM BRETAGNE, 29238 Brest Cedex 3 (FR); Eyes Triple Shut, 75015 Paris (FR)
(72) Inventeur: DE BOUGRENET DE LA TOCNAYE, Jean-Louis, F-29280 Guilers (FR); DUPONT, Laurent, F-29280 Plouzane (FR); SATHAYE, Kedar, 92400 COURBEVOIE (FR); MANNA, Sumankyalan, F-29200 Brest (FR)
(74) Mandataire: Vidon Brevets & Stratégie
(86) Numéro de dépôt international: PCT/EP2015/061449
(87) Numéro de publication internationale: WO 2015/177356

(56) Documents cités:
- US-A1- 2006 088 667
- US-A1- 2008 094 551
- US-A1- 2011 261 303
- US-A1- 2012 127 383

## Description

### 1. DOMAINE DE L'INVENTION

L'invention concerne la conception et la réalisation de composants optiques mettant en œuvre des matériaux à base de cristal liquide.

Plus précisément, l'invention concerne un dispositif d'obturation électro-optique à base de cristal liquide.

L'invention s'applique notamment, mais non exclusivement, à la réalisation des lunettes de visualisation 3D actives à cristaux liquides.

### 2. ARRIÈRE-PLAN TECHNOLOGIQUE

On s'attache plus particulièrement dans la suite de ce document à décrire la problématique existant dans le domaine des lunettes 3D actives, à laquelle ont été confrontés les inventeurs de la présente demande de brevet. L'invention ne se limite bien sûr pas à ce domaine particulier d'application, mais présente un intérêt pour tout dispositif d'obturation électro-optique devant faire face à une problématique proche ou similaire. A titre indicatif, l'invention pourra également être mise en œuvre pour rendre des surfaces vitrées plus ou moins opaque.

Il existe de nos jours un réel besoin de proposer des dispositifs d'obturation électro-optique dont le niveau d'atténuation de lumière puisse être contrôlé de façon précise et ultra-rapide.

Les lunettes 3D actives en particulier mettent en œuvre des obturateurs dynamiques adaptés à laisser passer plus ou moins la lumière incidente provenant de la scène visualisée. De tels obturateurs sont généralement adaptés pour commuter entre un état passant (on parle aussi d'état transparent) dans lequel le taux de transmission optique du composant est le plus élevé possible et un état bloquant (on parle aussi d'état absorbant) dans lequel le taux de transmission optique du composant est le plus faible possible ou encore dans lequel le taux d'absorption optique est le plus élevé possible. Un signal de synchronisation radiofréquence (RF) ou infrarouge (IR) permet de commander l'obturation alternée des verres actifs.

La plupart des verres actifs utilisés traditionnellement sont constitués de matériaux à base de cristaux liquides, dont les propriétés optiques peuvent être modifiées en leur appliquant un champ électrique. En disposant de tels matériaux dans une cellule optique, placée entre des polariseurs croisés, on obtient un obturateur pouvant être commandé par une tension électrique.

L'évolution des technologies des projecteurs pour la visualisation d'images stéréoscopiques impose désormais un taux de transmission optique des lunettes 3D supérieur à 80%, soit, en mode alterné, supérieur à 40% par œil (et donc par obturateur).

En outre, en fonction de la technologie utilisée, les lunettes 3D présentent une forte sensibilité au phénomène d'images fantômes (appelé *« ghosting »* en anglais) Une partie de l'image destinée à l'œil gauche (et donc non destinée à l'œil droit) est visible par l'œil droit et vice versa, pouvant entraîner une gêne pour l'utilisateur.

Les technologies actuelles d'obturateurs basées sur l'utilisation de polariseurs croisés pour réaliser les obturateurs dynamiques présentent une bonne immunité au phénomène de *« ghosting »,* mais ne sont pas adaptées pour assurer un fort contraste d'atténuation. Les lunettes 3D sont utilisées en effet dans des applications où les états bloquant et transparent sont des paramètres essentiels à maîtriser. Or les polariseurs limitent la quantité de transmission de lumière du dispositif, ce qui n'est pas optimal.

Afin de surmonter ce problème, des obturateurs dynamiques mettant en œuvre des cristaux liquides dichroïques ont été élaborés de manière à s'affranchir de l'utilisation de polariseurs. De tels dispositifs sont constitués d'une cellule optique comportant un mélange d'un matériau hôte à base de cristal liquide, majoritaire en concentration, et d'un matériau invité dichroïque qui absorbe la lumière dans une plage d'absorption donné. Le mélange hôte-invité est placé entre deux lames de verre transparentes équipées chacune d'une électrode pour l'application d'un champ électrique à la cellule. La cellule peut être dans un état relâché (ou de repos) dans lequel aucune tension ne lui est appliquée ou dans un état commuté dans lequel une tension lui est appliquée.

Pour obtenir des propriétés optiques satisfaisantes, le mélange à base de cristal liquide et de dopant doit être miscible (une liaison mésogène de longueur suffisante est nécessaire pour que le dopant soit mélangé (compatibilité chimique) et solidarisé totalement au cristal liquide).

Toutefois, la capacité d'absorption de la cellule optique est fonction de la concentration de dopant dichroïque présent dans le mélange et de l'épaisseur de la cellule. Un taux d'absorption élevé nécessite la mise en œuvre d'une cellule optique relativement épaisse (typiquement d'une épaisseur supérieure à 10 µm). De fortes tensions sont dans ce cas nécessaires pour commuter la cellule et le temps de commutation est relativement élevé (typiquement supérieur à 100 ms). De plus une concentration élevée de dopants dichroïques résulte en un risque de démixtion du mélange à base de cristal liquide et de dopant.

En outre, il est nécessaire de couvrir l'ensemble du spectre visible. Or, dans la pratique, de tels obturateurs ne permettent pas d'obtenir un taux de transmission supérieur à 80% avec une seule cellule optique dans l'état passant. Le taux d'absorption optique obtenu dans l'état bloquant est en outre insuffisant et ne permet pas de limiter le phénomène de *« ghosting ».*

Pour surmonter ce problème, une solution connue consiste à croiser deux cellules optiques à base de cristaux liquides dichroïques. Mais le taux de transmission du composant dans l'état passant s'en trouve impacté et ne satisfait plus aux contraintes de transmission imposées.

Une autre solution connue repose sur l'utilisation d'un diffuseur commutable à base de cristaux liquides cholestériques, qui atténue la lumière incidente en la diffusant suivant une distribution conique. Un tel dispositif est constitué d'une cellule optique comportant un matériau à cristal liquide cholestérique placé entre deux lames de verre transparentes équipées chacune d'une électrode pour l'application d'un champ électrique. Ce dispositif a la particularité de présenter, entre la phase planaire (losqu'aucun champ électrique n'est appliqué) et la phase homéotrope (lorsqu'un champ électrique est appliqué), une phase diffusante dite à focale conique lorsqu'il est soumis sous un champ électrique intermédiaire. Ce type de dispositif optique permet de limiter le phénomène de *« ghosting ».* Il n'en demeure pas moins qu'un tel dispositif requière une cellule d'épaisseur significative pour obtenir un taux d'absorption satisfaisant.

On connaît, dans l'état de la technique, comme illustré dans le document Chun-Ta Wang and Tsung-Hsien Lin, "Bistable reflective polarizer-free optical switch based in dye-doped cholesteric liquid crystal" (Optical Material Express, 2011, Vol.1, N°8 - 2011*),* une solution consistant à combiner, au sein d'une même cellule optique, un matériau à base de cristal liquide cholestérique avec un dopant dichroïque, afin de combiner les deux effets souhaités - le cristal liquide cholestérique jouant le rôle de diffuseur et le dopant dichroïque jouant le rôle d'absorbeur - et ainsi proposer un obturateur à double fonction d'atténuation.

Or l'obtention d'un mélange de cristaux liquides cholestériques et de dopants dichroïques au sein d'une même cellule est une opération délicate et complexe à mettre en œuvre, qui induit souvent des problèmes de démixtion des composés dudit mélange. Aux problèmes de démixtion se rajoute une contrainte sur le choix des matériaux (cristaux liquides, dopants chiraux, dopants dichroïques) du fait de leur possible incompatibilité physico-chimique, limitant ainsi l'étendue des mélanges envisageables à la synthèse et, de fait, l'étendue des propriétés électro-optiques pouvant en découler.

Un autre inconvénient de la solution connue est que de fortes tensions sont toujours nécessaires pour commuter la cellule optique, avec un temps de commutation relativement élevé.

D'autres dispositifs d'obturation électro-optique sont connus des documents US 2011/261303 A1, US 2008/094551 A1 et US 2006/088667 A1.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir un dispositif d'obturation qui offre des performances électro-optiques améliorées.

Au moins un mode de réalisation de l'invention a également pour objectif de fournir un tel dispositif qui présente des temps de commutation relativement faibles entre l'état bloquant et l'état passant et des tensions de commutation d'amplitude moindres.

Un autre objectif d'au moins un mode de réalisation de l'invention est de fournir un tel dispositif qui ne limite pas l'élaboration de mélanges uniquement à des mélanges de matériaux miscibles et compatibles entre eux. Autrement dit, un objectif de l'invention est de fournir un dispositif d'obturation électro-optique qui offre un choix plus grand dans les matériaux pouvant être utilisés.

Un autre objectif d'au moins un mode de réalisation de l'invention est de fournir un tel dispositif qui présente un fort contraste d'atténuation.

Un objectif complémentaire d'au moins un mode de réalisation de l'invention est de fournir un tel dispositif qui soit de mise en œuvre simple et peu coûteuse.

### 4. EXPOSÉ DE L'INVENTION

Dans un mode de réalisation particulier de l'invention, il est proposé un dispositif d'obturation électro-optique comprenant un ensemble d'au moins deux cellules optiques superposées comprenant :
* selon une première combinaison :
   - au moins une cellule d'absorption de lumière constituée d'une couche d'un mélange constitué d'un matériau hôte à base de cristal liquide et d'au moins un matériau invité dichroïque, et
   - au moins une cellule de diffusion de lumière constituée d'une couche d'un matériau à cristal liquide cholestérique présentant une phase à orientation moléculaire conique focale, ou
* selon une deuxième combinaison :
   - une pluralité de cellules de diffusion de lumière chacune constituée d'une couche d'un matériau à cristal liquide cholestérique présentant une phase à orientation moléculaire conique focale.

Ainsi, le fait de dissocier la cellule optique de l'art antérieur en deux cellules distinctes, permet de réduire l'épaisseur de chacune des cellules comprises dans le dispositif, pour un effet optique identique. Ceci a pour effet de réduire la tension de commutation nécessaire pour commuter chaque cellule en un premier et deuxième état, ainsi que le temps de commutation.

Selon la première combinaison, en superposant au minima deux cellules fonctionnelles distinctes, l'une remplissant la fonction d'absorption et l'autre la fonction de diffusion, l'invention permet d'offrir un dispositif d'obturation à double mode d'atténuation pour lequel les propriétés électro-optiques peuvent être optimisées séparément. De plus, grâce à cette configuration astucieuse, le dispositif selon l'invention ne requiert aucun mélange de matériaux dichroïques et de cristaux liquides cholestériques au sein d'une même cellule, pour assurer l'effet de double atténuation (par absorption optique d'une part et par diffusion optique d'autre part). En s'affranchissant des inconvénients liés à l'utilisation d'une cellule unique à double atténuation, l'étendue des mélanges envisageables n'est plus donc limitée par l'utilisation de matériaux compatibles et miscibles; le choix des matériaux peut être étendu à tout type de matériaux permettant de réaliser séparément la fonction d'absorbeur optique d'une part et la fonction de diffuseur optique d'autre part. Les performances électro-optiques s'en trouvent donc améliorées.

Selon un aspect particulier de l'invention, chaque cellule d'absorption coopère, selon la première combinaison, avec des premiers moyens de commutation aptes à faire commuter ladite cellule d'absorption entre au moins deux états de fonctionnement : un état absorbant et un état transparent, et dans lequel chaque cellule de diffusion coopère avec des deuxièmes moyens de commutation aptes à faire commuter ladite cellule de diffusion entre au moins deux états de fonctionnement : un état diffusant et un état transparent.

Dans un mode de réalisation particulier, les premiers et les deuxièmes moyens de commutation sont distincts, nécessitant l'envoi de signaux de commande séparés aux cellules optiques.

Dans une variante de réalisation, les premiers moyens de commutation sont communs aux cellules d'absorption et les deuxièmes moyens de commutation sont communs aux cellules de diffusion, permettant la transmission d'un premier signal de commande commun parallèle à toutes les cellules d'absorption et d'un deuxième signal de commande commun parallèle à toutes les cellules de diffusion.

Dans un mode de réalisation préférentiel, les premiers et les seconds moyens de commutation sont couplés de façon à pouvoir commuter respectivement les cellules d'absorption et de diffusion simultanément.

Dans une variante de réalisation, les premiers et les seconds moyens de commutation sont couplés de façon à pouvoir commuter respectivement les cellules d'absorption et de diffusion de manière asynchrone.

Selon une réalisation particulière de l'invention, chaque cellule d'absorption est dans un état absorbant lorsqu'aucun champ électrique ne lui est appliqué et dans un état transparent lorsqu'un champ électrique lui est appliqué.

Dans ce cas, la couche de matériau hôte à base de cristal liquide est à anisotropie diélectrique positive.

Selon une variante de réalisation de l'invention, chaque cellule d'absorption est dans un état transparent lorsqu'aucun champ électrique ne lui est appliqué et dans un état absorbant lorsqu'un champ électrique lui est appliqué.

Dans ce cas, la couche de matériau hôte à base de cristal liquide est à anisotropie diélectrique négative.

Selon une caractéristique particulière, chaque cellule de diffusion est dans un état de diffusion lorsqu'un champ électrique, inférieur à une valeur seuil de champ électrique lui est appliqué et dans un état transparent lorsqu'un champ électrique, supérieur à la valeur seuil de champ électrique, lui est appliqué ou lorsqu'aucun champ électrique ne lui est appliqué.

Le matériau à cristal liquide cholestérique compris dans une cellule de diffusion selon l'invention présente :
- une orientation moléculaire (ou phase) planaire au repos (c'est-à-dire lorsqu'aucun champ électrique ne lui est appliqué),
- une orientation moléculaire (ou phase) conique focale, permettant de diffuser la lumière incidente, lorsqu'un champ ne dépassant une valeur seuil de champ électrique lui est appliqué à ses bornes, et
- une orientation moléculaire (ou phase) homéotrope lorsqu'un champ dépassant une valeur seuil de champ électrique lui est appliqué à ses bornes.

L'intérêt de l'existence d'une phase intermédiaire diffusante des matériaux à cristal liquide cholestérique est que la commutation entre l'état transparent et l'état diffus est rapide et le champ électrique à appliquer à la cellule de diffusion est d'amplitude moindre. Par ailleurs, le fait que la cellule cholestérique est transparente en l'absence de champ appliqué est un avantage du point de vue de la sécurité visuelle pour l'utilisateur.

Ainsi, pour une cellule d'absorption comprenant un cristal liquide à anisotropie diélectrique positive, le dispositif d'obturation est dans un régime de fonctionnement bloquant lorsqu'un champ électrique inférieur à une valeur seuil est appliqué à la cellule de diffusion et lorsque la cellule d'absorption est au repos : le dispositif présente un fonctionnement absorbant-diffusant. Le dispositif d'obturation est dans un régime de fonctionnement passant lorsqu'un champ électrique est appliqué à la cellule d'absorption et lorsqu'un champ électrique dépassant une valeur seuil est appliqué à la cellule de diffusion et lorsque la cellule de diffusion est au repos.

Ainsi, pour une cellule d'absorption comprenant un cristal liquide à anisotropie diélectrique négative, le dispositif d'obturation est dans un régime de fonctionnement passant lorsque la cellule d'absorption est au repos et lorsque la cellule de diffusion est au repos ou lorsqu'un champ électrique dépassant une valeur seuil est appliqué à celle-ci. Le dispositif d'obturation est dans un régime de fonctionnement bloquant lorsqu'un champ électrique est appliqué à la cellule d'absorption et lorsqu'un champ électrique inférieur à une valeur seuil est appliqué à la cellule de diffusion : le dispositif présente un fonctionnement absorbant-diffusant.

Selon une caractéristique avantageuse, ledit au moins un matériau invité dichroïque présente une concentration comprise entre 10% et 15% en poids dudit mélange.

Ceci a pour effet de limiter tout risque de démixtion tout en assurant un taux d'absorption suffisant.

Selon une caractéristique particulière, ladite couche de mélange constitué d'un matériau hôte à base de cristal liquide et d'au moins un matériau invité dichroïque est une couche mince d'épaisseur comprise entre 2 et 4 µm.

Ainsi, le temps de commutation de chaque cellule d'absorption est rapide et la tension à appliquer aux bornes de celle-ci est optimisée.

L'association d'une cellule d'absorption neutre permettant une variation vers une teinte de gris avec la cellule de diffusion permet de réduire l'aspect laiteux non souhaité de la cellule jouant le rôle de diffuseur. L'addition d'un absorbant au diffuseur permet d'augmenter le contraste entre état passant et bloquant de l'ensemble.

Selon une caractéristique particulière, ladite couche de matériau à cristal liquide cholestérique est une couche mince d'épaisseur comprise entre 4 et 5 µm.

Ainsi, le temps de commutation de chaque cellule de diffusion est rapide et la tension à appliquer aux bornes de celle-ci est optimisée.

Selon une caractéristique particulière, ladite couche de matériau à cristal liquide cholestérique comprend un dopant de type chiral ayant une concentration appartenant au groupe comprenant :
- une concentration sensiblement égale à 10% en poids de ladite couche ;
- une concentration sensiblement comprise entre 20% et 30% en poids de ladite couche.

Le domaine spectral diffusé par la cellule de diffusion est fonction de la concentration du dopant chiral contenue dans celle-ci. Un des avantages de la cellule de diffusion est que la transmission est optimale dès lors que le pas de l'hélice cholestérique est adapté à la bande spectrale considérée. Ceci peut être obtenu en jouant sur la concentration et/ou sur la nature des dopants chiraux et/ou sur l'épaisseur de la cellule. Le pas de l'hélice intervient dans la phase diffusante conique focale. En effet, si le pas de l'hélice est de l'ordre de grandeur des longueurs d'onde du spectre visible, le matériau à cristal liquide cholestérique réfléchit (rétrodiffuse) une partie du spectre visible et l'œil verra alors une plage spectrale (coloration) correspondant à la complémentaire de la plage spectrale (coloration) réfléchie. Ainsi, choisir une concentration de sorte à définir un pas d'hélice cholestérique dans l'infrarouge ou dans l'ultraviolet permet d'obtenir une cellule dite neutre dans le spectre visible (niveaux de gris), c'est-à-dire une cellule dans laquelle la lumière incidente est diffusée sans coloration. Enfin l'association d'une cellule d'absorption avec au moins une cellule de diffusion permet de limiter les sources d'images fantômes (*« gosthing »*).

Selon une autre caractéristique particulière de l'invention, ladite couche de mélange comprise dans ladite au moins une cellule d'absorption de lumière est à base de cristal liquide nématique à double fréquence.

Selon une autre caractéristique particulière de l'invention, ladite couche de matériau à cristal liquide cholestérique est à base de cristal liquide à double fréquence.

Le cristal liquide à double fréquence (aussi appelé *« Dual Frequency Liquid Crystal »* en anglais) présente une anisotropie diélectrique positive aux basses fréquences et négative aux hautes fréquences. La fréquence pour laquelle l'anisotropie diélectrique égale zéro est appelée la fréquence *cross-over.* L'utilisation de cristaux liquides double fréquence au sein de chaque cellule d'absorption et/ou de diffusion permet d'accélérer les temps de commutation de celles-ci lorsqu'un champ électrique est appliqué.

Selon un aspect particulier, chaque cellule de diffusion coopère, selon la deuxième combinaison, avec des moyens de commutation aptes à faire commuter ladite cellule de diffusion entre au moins deux états de fonctionnement : un état diffusant et un état transparent. Chaque cellule de diffusion est dans l'état de diffusion lorsqu'un champ électrique, inférieur à une valeur seuil de champ électrique lui est appliqué et dans l'état transparent lorsqu'un champ électrique, supérieur à la valeur seuil de champ électrique, lui est appliqué ou lorsqu'aucun champ électrique ne lui est appliqué.

Dans un autre mode de réalisation de l'invention, il est proposé un système de visualisation stéréoscopique actif comprenant deux dispositifs d'obturation électro-optique, chaque dispositif d'obturation électro-optique mettant en œuvre les caractéristiques précitées (dans l'un quelconque de ses différents modes de réalisation). Le système de visualisation stéréoscopique actif peut être une paire de lunettes 3D active par exemple, chaque oculaire étant doté d'un dispositif d'obturation électro-optique selon l'invention.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- les figures 1A et 1B présentent la structure simplifiée d'un dispositif d'obturation électro-optique selon un premier mode de réalisation particulier de l'invention ;
- les figures 2A et 2B présentent la structure simplifiée d'un dispositif d'obturation électro-optique selon un deuxième mode de réalisation particulier de l'invention ;
- les figures 3A et 3B présentent la structure simplifiée d'un dispositif d'obturation électro-optique selon un troisième mode de réalisation particulier de l'invention ;
- la figure 4 représente un schéma de principe montrant les différentes configurations moléculaires d'une cellule de diffusion, en fonction du champ électrique appliqué ;
- la figure 5 représente un exemple de chronogramme d'un signal de commande d'une cellule de diffusion selon un mode de réalisation particulier de l'invention.

### 6. DESCRIPTION DÉTAILLÉE

Sur toutes les figures du présent document, les éléments et étapes identiques sont désignés par une même référence numérique.

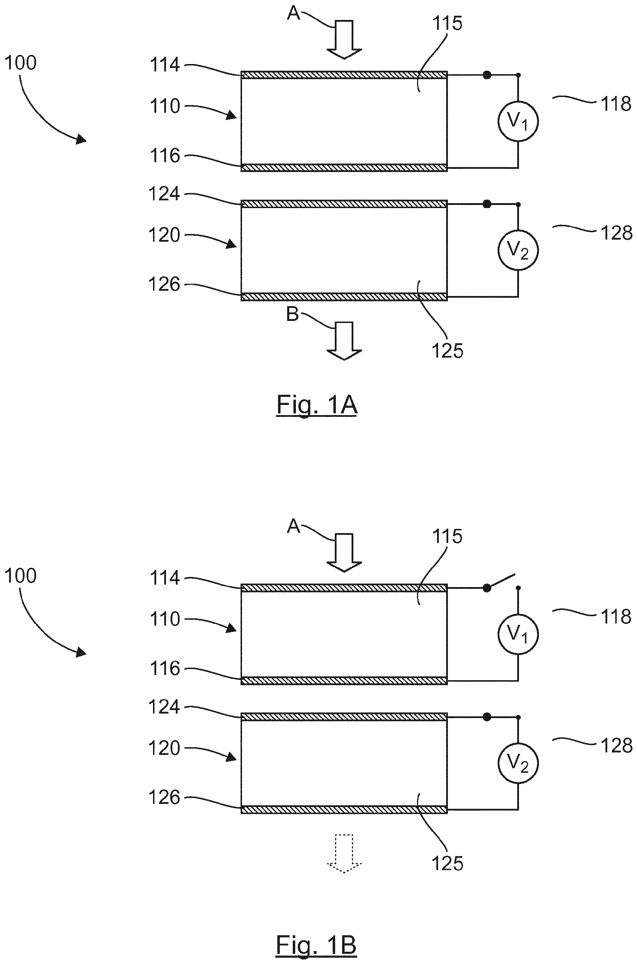

On présente, en relation avec les **figures 1A** et **1B** la structure simplifiée d'un dispositif d'obturation électro-optique 100 selon un premier mode de réalisation particulier de l'invention. La figure 1A illustre le dispositif d'obturation électro-optique 100 dans un régime de fonctionnement passant et la figure 1B illustre le dispositif d'obturation électro-optique 100 dans un régime de fonctionnement bloquant.

Un tel dispositif d'obturation peut être mis en œuvre par exemple dans une paire de lunettes 3D active au niveau de chaque oculaire.

On considère par la suite une lumière incidente (représentée par la flèche A) arrivant sur le dispositif d'obturation 100 comme étant non polarisée et présentant une bande spectrale large dans le visible (sensiblement comprise entre 400 nm et 700 nm).

Le dispositif d'obturation électro-optique 100 comprend un ensemble de deux cellules optiques superposées l'une sur l'autre, à savoir une cellule d'absorption de lumière 110 et une cellule de diffusion de lumière 120. Dans cet exemple, la cellule d'absorption 110 est agencée de façon à être superposée sur la cellule de diffusion 120.

Bien entendu, d'autres réalisations peuvent être envisagées sans sortir du cadre de l'invention. On peut prévoir, par exemple, un agencement inversé des cellules optiques, avec la cellule de diffusion 120 superposée sur la cellule d'absorption 110.

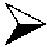 La cellule d'absorption 110

La cellule d'absorption 110 comprend deux lames de matériau optiquement transparent 114 et 116, par exemple des lames de verre optique, et une couche 115 d'un mélange constitué d'un matériau hôte à base de cristal liquide (de type nématique par exemple) et d'un matériau invité dichroïque (de type métallo-organique ou organique par exemple) prévue entre les lames. Le matériau invité dichroïque est destiné à absorber la lumière incidente dans une bande d'absorption spectrale donnée, par exemple la bande spectrale 400 nm - 700 nm.

Le matériau hôte à base de cristal liquide compris dans la cellule d'absorption 110 est un matériau à anisotropie diélectrique positive. Il présente une configuration moléculaire tel que, lorsqu'aucun champ électrique ne lui est appliqué, le matériau se trouve dans un état absorbant et, lorsqu'un champ électrique lui est appliqué, dans un état transparent.

La cellule d'absorption 110 est commutable entre un état transparent (figure 1A) et un état absorbant (figure 1B). La cellule d'absorption 110 pour cela coopère avec des moyens de commutation 118 configurés pour commuter la cellule d'absorption 110 entre l'état absorbant et l'état transparent, par application ou non d'un champ électrique créé au moyen du signal de commande V1 entre deux électrodes conductrices. Chaque lame de verre 114 et 116 comprend, sur sa surface interne, une couche d'oxyde d'indium-étain formant électrode conductrice, celle-ci étant relié aux moyens de commutation 118. L'oxyde d'indium-étain est un matériau optiquement transparent et conducteur d'électricité.

Sur la figure 1B, la cellule d'absorption 110 est dans un état absorbant en l'absence de champ électrique (la cellule est dite « au repos »). Aucun signal de commande n'est généré. Le faisceau lumineux incident A est absorbé au moins partiellement par la cellule d'absorption 110.

Sur la figure 1A, le signal de commande V1 est appliqué à la cellule d'absorption 110, créant ainsi un champ électrique de sorte que la cellule d'absorption 110 commute depuis l'état absorbant vers l'état transparent. Dans cette configuration, le faisceau lumineux incident A traverse la cellule d'absorption 110 sans y être absorbé.

Pour commuter à nouveau la cellule d'absorption vers son état absorbant, il suffit que le signal de commande V1 ne soit plus appliqué à la cellule d'absorption 110.

On pourrait prévoir, dans une variante de réalisation, de remplacer le matériau à anisotropie diélectrique positive par un matériau à anisotropie diélectrique négative. Dans ce cas, le régime de commutation serait inversé : l'état transparent de la cellule serait obtenu en absence de champ électrique et l'état absorbant de la cellule en présence de champ électrique.

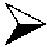 La cellule de diffusion 120

La cellule de diffusion 120 comprend deux lames de matériau optiquement transparent 124 et 126, par exemple des lames de verre optique, et une couche 125 d'un matériau à cristal liquide cholestérique (de type chiral par exemple) prévue entre les lames.

La cellule de diffusion 120 pour cela coopère avec des moyens de commutation 128 configurés pour commuter la cellule de diffusion 120 entre un état transparent (figure 1A) et un état de diffusion (figure 1B), par application d'un champ électrique de différentes intensités. Ce champ électrique est créé au moyen du signal de commande V2 entre deux électrodes conductrices. Chaque lame de verre 124 et 126 comprend sur sa surface interne une couche d'oxyde d'indium-étain formant électrode conductrice, celle-ci étant reliée aux moyens de commutation 128. L'oxyde d'indium-étain est un matériau optiquement transparent et conducteur d'électricité.

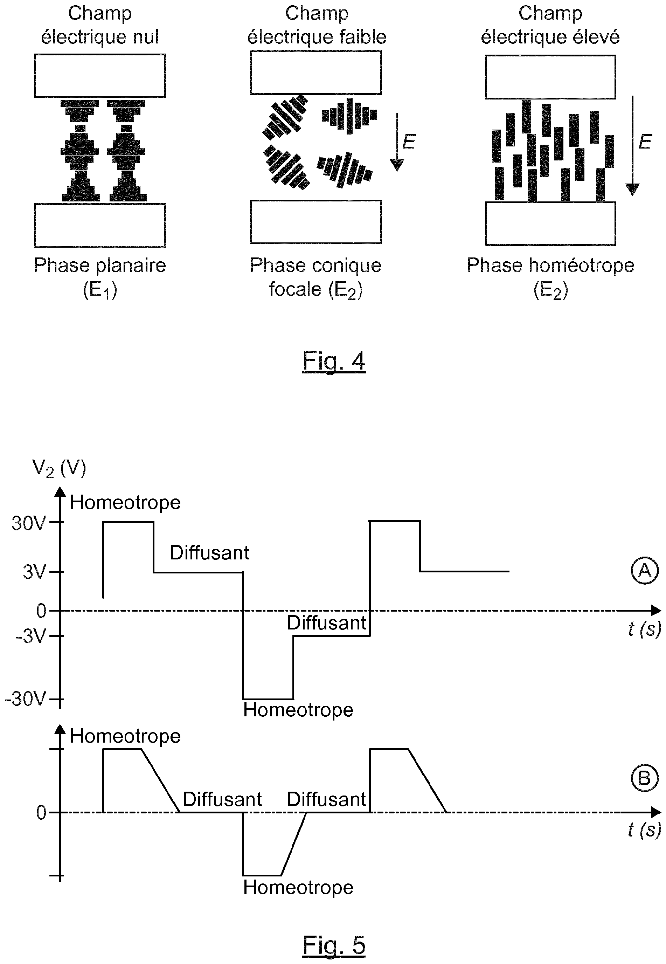

Comme illustré sur la **figure 4****,** le matériau à cristal liquide cholestérique a la particularité de pouvoir présenter trois configurations moléculaires distinctes, en fonction de l'intensité du champ électrique qui lui est appliqué, à savoir :
- une configuration moléculaire planaire (phase E1) lorsqu'aucun champ électrique ne lui est appliqué (champ électrique d'intensité nulle) ;
- une configuration moléculaire conique focale (phase E2), lorsqu'un champ électrique d'un premier niveau lui est appliqué (on parle aussi de « champ électrique de faible intensité ») ;
- une configuration moléculaire homéotrope (phase E3) lorsqu'un champ électrique d'un deuxième niveau lui est appliqué à ses bornes (on parle aussi de « champ électrique d'intensité élevée »).

### Configuration moléculaire planaire (E1)

Du fait de son arrangement en hélice de molécules chirales, le cristal liquide cholestérique présente, lorsqu'aucun champ électrique ne lui est appliqué, une configuration moléculaire à orientation planaire (E1) dans laquelle tout faisceau lumineux incident dont la longueur d'onde est hors de la bande spectrale de réflexion caractéristique du matériau cholestérique traverse le matériau cholestérique sans y est être réfléchi. La bande spectrale de réflexion du matériau cholestérique dépend principalement du pas de l'hélice cholestérique qui lui-même dépend, pour une épaisseur donnée, de la concentration du dopant chiral présent dans le mélange de cristal liquide cholestérique. Le matériau cholestérique dans sa phase planaire (E1) est donc réflectif de la bande spectrale de réflexion et transparent hors de cette bande. Dans cette configuration, l'axe d'orientation moléculaire est parallèle à la surface des lames de verres.

Prenons, à titre d'exemple, un matériau à cristal liquide cholestérique comprenant un dopant de type chiral de concentration sensiblement égale à 10% en poids de la couche de cristal liquide cholestérique 125 avec une bande spectrale de réflexion appartenant à la bande spectrale infrarouge (par exemple 850 nm). Ceci permet à la cellule de diffusion 120, au repos, de réfléchir tout faisceau incident de la longueur d'onde 850 nm et de laisser passer tout faisceau lumineux incident dont la longueur d'onde est hors de cette bande spectrale, à savoir la bande spectrale du visible comprise entre 400 nm et 700 nm.

### Configuration moléculaire à focale conique (E2)

Le matériau cholestérique, dans sa phase à focale conique (E2), agit comme un diffuseur optique. Ainsi, la cellule de diffusion 120, dans cette configuration, atténue la lumière incidente en la diffusant selon une distribution conique. Cette configuration correspond à un état de transition intermédiaire métastable. Pour obtenir cette configuration, un champ électrique de premier niveau doit être appliqué aux bornes de la cellule de diffusion 120.

On entend par « premier niveau », un champ électrique de faible intensité, pouvant être compris entre 1V et 5V, par opposition à « deuxième niveau », qui correspond à un champ électrique d'intensité plus élevée, pouvant être compris entre 25V et 40V.

### Configuration moléculaire homéotrope (E3)

Le matériau cholestérique, dans sa phase homéotrope (E3), est transparent quelque soit la longueur d'onde du faisceau lumineux incident. Dans cette configuration, l'axe d'orientation moléculaire est perpendiculaire à la surface des lames de verres. Ainsi, la cellule de diffusion 120, dans cette configuration, laisse passer la lumière incidente sans l'absorber ni la diffuser. Pour obtenir cette configuration, un champ électrique de deuxième niveau doit être appliqué aux bornes de la cellule de diffusion 120.

Sur la figure 1A, un signal de commande V2, par exemple de 30V, est généré de sorte à appliquer un champ électrique d'intensité élevée à la cellule de diffusion 120, pour que la cellule de diffusion 120 commute dans son état transparent. Dans cette configuration, le faisceau lumineux incident traverse la cellule d'absorption 110 sans y être absorbé.

A titre d'alternative, la cellule de diffusion 120 peut se trouver dans un état transparent également en l'absence de champ électrique (en configuration planaire).

Sur la figure 1B, un signal de commande V2, par exemple de 3V, est généré de sorte à appliquer un champ électrique de faible d'intensité à la cellule de diffusion 120, pour que la cellule de diffusion 120 commute dans son état diffusant. Dans cette configuration, le faisceau lumineux incident est diffusé selon une distribution conique atténuant ainsi le faisceau lumineux incident dans la bande spectrale visible (400 nm - 700 nm).

L'association de la cellule de diffusion 120 avec la cellule d'absorption 110 permet de limiter le phénomène de *« gosthing ».*

Un exemple de chronogramme illustrant un régime de tension de commande appliqué à la cellule de diffusion 120, est illustré plus loin en relation avec la figure 5.

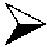 Le couple de cellules superposées 110 et 120

En régime de fonctionnement passant (figure 1A), le faisceau lumineux incident A traverse la cellule d'absorption 110, puis la cellule de diffusion 120 sans y avoir été absorbé, lesdites cellules d'absorption 110 et de diffusion 120 étant dans un état transparent. Le faisceau lumineux sortant du dispositif d'obturation 100 est référencé B sur la figure.

En régime de fonctionnement bloquant (figure 1B), le faisceau lumineux incident A est doublement atténué, la cellule d'absorption 110 jouant le rôle d'absorbeur et la cellule de diffusion 120 jouant le rôle de diffuseur. Ainsi, au lieu d'une cellule unique remplissant la double fonction absorption-diffusion comme c'est la cas dans l'état de la technique, l'invention prévoit de superposer deux cellules fonctionnelles distinctes et contrôlable indépendamment, la première remplissant la fonction d'absorption de lumière, et la deuxième la fonction de diffusion de lumière. Une telle configuration permet de réduire l'épaisseur des cellules du dispositif d'obturation électro-optique et donc les tensions appliquées à celui-ci au cours de son fonctionnement.

Pour améliorer davantage le temps de commutation des cellules 110 et 120, on peut prévoir d'introduire un cristal liquide de nématique à double fréquence de fonctionnement (« *Dual Frequency Liquid Crystal »* ou *DFLC* en anglais) dans la cellule d'absorption 110 et un cristal liquide cholestérique à double fréquence de fonctionnement dans la cellule de diffusion 110. Le fonctionnement des cristaux liquides à double fréquence est plus amplement illustré dans le document de brevet US 5621552.

En outre, la concentration du matériau dichroïque présent dans la cellule 110 est choisie sensiblement égale à 10% en poids du mélange 115 de façon à limiter tout risque de démixtion entre le matériau à cristal liquide et le matériau dichroïque, tout en assurant un taux d'absorption suffisant.

On présente, en relation avec la **figure 5****,** un exemple particulier de régime de tension de commande appliqué à la cellule de diffusion 120 pour la faire commuter entre l'état transparent et l'état diffusant. Il s'agit d'un régime dynamique de contrôle de la commutation de la cellule de diffusion 120 entre l'état transparent, lorsque le matériau présente une configuration homéotrope, et l'état diffusant, lorsque le matériau présente une configuration à focale conique.

L'état transparent obtenu lorsque le matériau présente une configuration planaire n'est pas utilisé ici dans cet exemple, en raison du temps de commutation non négligeable pour obtenir ce type de configuration moléculaire.

On décrit ci-après le chronogramme A. En appliquant un champ électrique d'intensité élevée, au moyen d'une tension de commande V2 égale à +30V par exemple, la cellule de diffusion 120 commute dans un état transparent (phase homéotrope E3). Puis, en appliquant un champ électrique de faible intensité, au moyen d'une tension de commande V2 égale à +3V par exemple, la cellule de diffusion 120 commute dans l'état diffusant (phase à focale conique E2). Puis, pour commuter la cellule de diffusion 120 à nouveau dans l'état transparent (phase E3), on applique à nouveau un champ électrique d'intensité élevée, mais au moyen d'une tension de commande négative V2, égale à -30V par exemple. Puis, pour commuter la cellule de diffusion 120 dans l'état diffusant (phase E2), on applique à nouveau un champ électrique de faible intensité, mais au moyen d'une tension de commande négative V2, égale à -3V par exemple. Le fait d'appliquer successivement un cycle de champ électrique fort/faible avec des valeurs positives et un cycle champ électrique fort/faible avec des valeurs négatives, permet d'assurer une commutation efficace de la cellule de diffusion 120 (les problèmes liés aux charges ioniques étant ainsi minimisés).

Bien entendu, il est possible de mettre en œuvre un régime de commande basé uniquement sur des champs électriques de valeurs positives ou uniquement sur des champs électriques de valeurs négatives.

Le chronogramme B diffère principalement du chronogramme A en ce que la phase à focale conique est obtenue par décroissance progressive du champ électrique dans le temps.

D'autres régimes de commande peuvent bien sûr être envisagé sans sortir du cadre de l'invention. Il s'agit de détails d'implémentation à la portée de l'homme du métier.

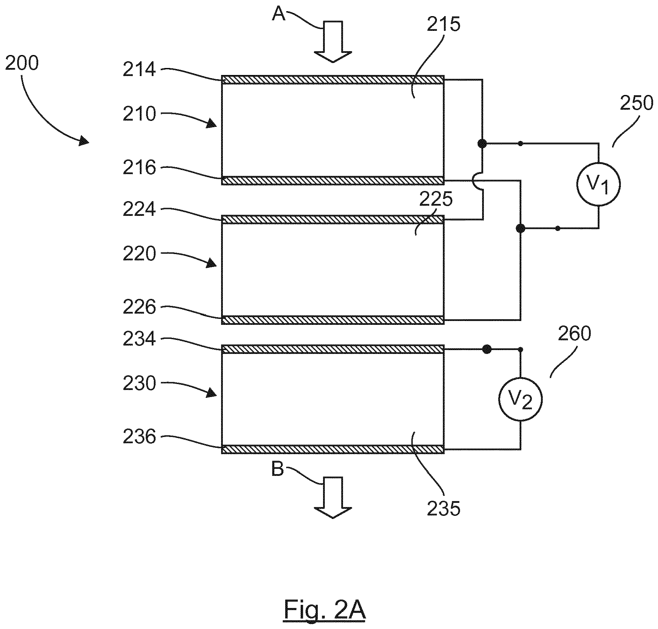

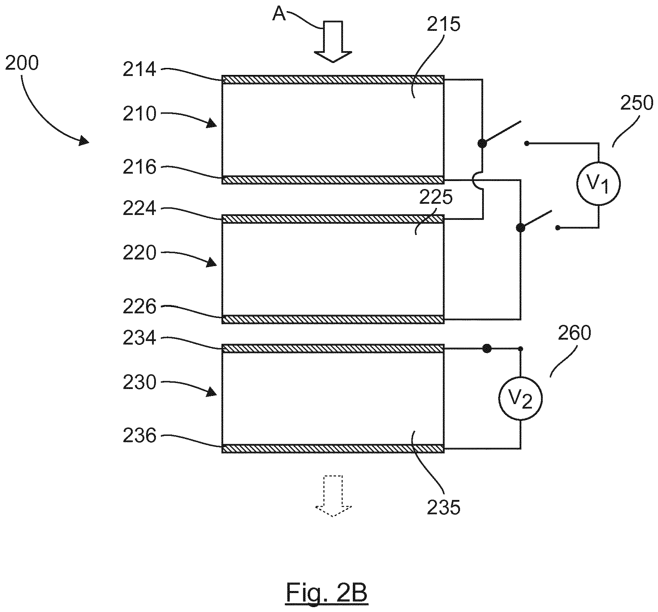

On présente maintenant, en relation avec les **figures 2A** et **2B** la structure simplifiée d'un dispositif d'obturation électro-optique 200 selon un deuxième mode de réalisation particulier de l'invention. La figure 2A illustre le dispositif d'obturation électro-optique 200 dans un régime de fonctionnement passant et la figure 2B dans un régime de fonctionnement bloquant.

Ce mode de réalisation permet d'offrir une plus grande liberté dans le choix des dopants dichroïques pouvant être utilisés dans le dispositif d'obturation, tout en s'affranchissant des problèmes éventuels de démixtion.

Le dispositif d'obturation électro-optique 200 comprend un ensemble de trois cellules optiques superposées :
- une première cellule d'absorption de lumière 210 comprenant une couche 215 d'un mélange constitué d'un matériau hôte à base de cristal liquide (de type nématique par exemple) et d'au moins un matériau invité dichroïque (de type organique par exemple), prévue entre deux lames de verre optiquement transparentes 214, 216 ;
- une deuxième cellule d'absorption de lumière 220 comprenant une couche 225 d'un mélange constitué d'un matériau hôte à base de cristal liquide (de type E44 par exemple) et d'au moins un matériau invité dichroïque (de type organique par exemple), prévue entre deux lames de verre optiquement transparentes 224, 226 ;
- une cellule de diffusion de lumière 230 comprenant une couche 235 d'un matériau à cristal liquide cholestérique prévue entre deux lames de verre optiquement transparentes 234, 236.

Dans cet exemple, on considère que les première et deuxième cellules d'absorption 210, 220 présentent chacune les mêmes caractéristiques électro-optiques que celles de la cellule d'absorption 110 illustrée sur les figures 1A et 1B. On considère également que la cellule de diffusion 230 présente les mêmes caractéristiques électro-optiques que celles de la cellule de diffusion 120 illustrée sur les figures 1A et 1B.

Le fait de dédoubler les cellules d'absorption permet au dispositif d'obturation de présenter un régime bloquant avec un taux d'absorption optimisé. En effet, l'effet d'absorption du dispositif d'obturation s'en trouve dédoublé.

Il est possible en particulier d'agencer les cellules d'absorption 210 et 220 de sorte que le matériau hôte à base de cristal liquide compris dans la première cellule d'absorption 210 présente un axe d'orientation moléculaire orthogonal à l'axe d'orientation moléculaire du matériau hôte à base de cristal liquide compris dans la deuxième cellule d'absorption 220. Cette configuration permet d'améliorer l'état bloquant du dispositif d'obturation en ayant un taux d'absorption optique plus élevé. Il est également possible d'agencer les cellules d'absorption 210 et 220 de sorte que le matériau hôte à base de cristal liquide compris dans la première cellule d'absorption 210 présente un axe d'orientation moléculaire parallèle à l'axe d'orientation moléculaire du matériau hôte à base de cristal liquide compris dans la deuxième cellule d'absorption 220, afin d'améliorer l'état passant du dispositif d'obturation 200.

Les cellules d'absorption 210 et 220 coopèrent avec des premiers moyens de commutation 250 communs, permettant de faire commuter simultanément chaque cellule d'absorption entre l'état transparent (figure 2A) et l'état absorbant (figure 2B).

Ainsi, lorsqu'un champ électrique est appliqué aux cellules d'absorption 210 et 220, un signal de commande commun parallèle est transmis aux cellules d'absorption 210 et 220.

La cellule de diffusion 230 coopère avec des seconds moyens de commutation 260, qui permettent de faire commuter la cellule de diffusion entre l'état transparent (figure 2A) et l'état diffusant (figure 2B) selon le même principe de fonctionnement que celui illustré plus haut en relation les figures 1A et 1B pour la cellule de diffusion 120.

De plus, les premiers et seconds moyens de commutation 250 et 260 sont couplés respectivement de façon à faire commuter, de manière synchrone, le couple de cellules d'absorption 210 et 220 et la cellule de diffusion 230.

Bien entendu, il s'agit d'un exemple de réalisation et bien d'autres exemples de réalisation peuvent être envisagés sans sortir du cadre de l'invention. Par exemple, on pourrait prévoir, dans une variante, que les premiers moyens de commutation soient distincts, ce qui nécessiterait l'envoi d'un signal de commande séparé aux cellules d'absorption 210 et 220.

Il est clair que de nombreux autres modes de réalisation de l'invention peuvent être envisagés. On peut notamment prévoir que le dispositif d'obturation se trouve dans un régime transparent lorsqu'aucun champ électrique n'est appliqué aux cellules d'absorption. Dans ce cas, la couche de matériau hôte à base de cristal liquide de la (ou des) cellule(s) d'absorption doit être à anisotropie diélectrique négative.

Par ailleurs, il convient de noter que l'ordre et le nombre des cellules optiques superposées dans le dispositif d'obturation n'a pas d'importance et d'autres combinaisons de cellules peuvent être envisagées sans sortir du cadre de l'invention. A *minima,* le dispositif d'obturation électro-optique selon l'invention doit comprendre un ensemble d'au moins deux cellules optiques superposées.

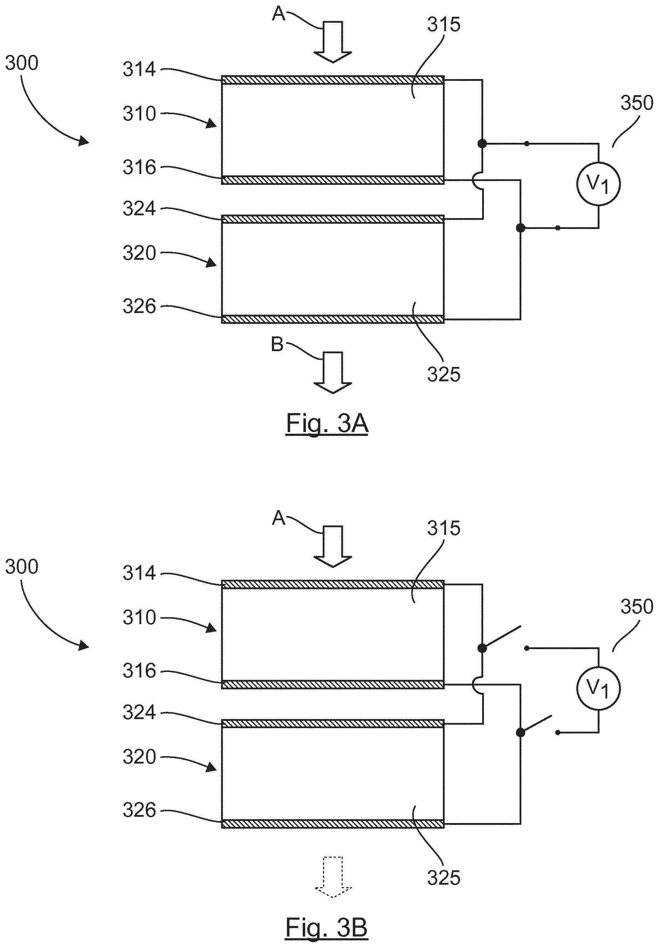

Les **figures 3A** et **3B** présentent un dispositif d'obturation électro-optique selon un troisième exemple de réalisation particulier de l'invention. La figure 3A illustre le dispositif d'obturation électro-optique 300 dans un régime de fonctionnement passant et la figure 3B dans un régime de fonctionnement bloquant.

Le dispositif d'obturation électro-optique 300 comprend plus particulièrement un ensemble de deux cellules de diffusion superposées, référencées 310 et 320. La cellule de diffusion de lumière 310 comprend une couche 315 d'un matériau à cristal liquide cholestérique prévue entre deux lames de verre optiquement transparentes 314, 316. La cellule de diffusion de lumière 320 comprend une couche 325 d'un matériau à cristal liquide cholestérique prévue entre deux lames de verre optiquement transparentes 324, 326.

On considère que les cellules de diffusion 310 et 320 présentent chacune les mêmes caractéristiques électro-optiques que celles de la cellule de diffusion 120 illustrée sur les figures 1A et 1B. Le fait de dédoubler les cellules de diffusion permet de fournir un dispositif d'obturation ayant un régime de fonctionnement bloquant avec un taux d'absorption optimisé.

Les cellules d'absorption 310 et 320 coopèrent avec des moyens de commutation 350 communs, permettant de faire commuter simultanément chaque cellule de diffusion entre l'état transparent (figure 2A) et l'état absorbant (figure 2B) en fonction du niveau de la tension appliquée (tension « forte » de 30 V par exemple pour que chaque cellule se trouve dans un état transparent et tension « faible » de 3V par exemple pour que chaque cellule se trouve dans un état diffusant) selon le même principe de fonctionnement que celui décrit plus haut en relation avec les figures 1A et 1B.

## Revendications

1. Dispositif d'obturation électro-optique (100) **caractérisé en ce qu'**il comprend un ensemble d'au moins deux cellules optiques superposées comprenant :
- au moins une cellule d'absorption de lumière (110) constituée d'une couche (115) d'un mélange de matériau hôte à base de cristal liquide et d'au moins un matériau invité dichroïque, et
- au moins une cellule de diffusion de lumière (120) constituée d'une couche (125) de matériau à cristal liquide cholestérique présentant une phase à orientation moléculaire conique focale.

2. Dispositif selon la revendication 1, dans lequel chaque cellule d'absorption coopère avec des premiers moyens de commutation (118) aptes à faire commuter ladite cellule d'absorption (110) entre au moins deux états de fonctionnement : un état absorbant et un état transparent, et dans lequel chaque cellule de diffusion coopère avec des deuxièmes moyens de commutation (125) aptes à faire commuter ladite cellule de diffusion (120) entre au moins deux états de fonctionnement : un état diffusant et un état transparent.

3. Dispositif selon la revendication 2, dans lequel chaque cellule d'absorption (110) est dans l'état absorbant lorsqu'aucun champ électrique ne lui est appliqué et dans l'état transparent lorsqu'un champ électrique lui est appliqué.

4. Dispositif selon la revendication 2, dans lequel chaque cellule d'absorption (110) est dans l'état transparent lorsqu'aucun champ électrique ne lui est appliqué et dans l'état absorbant lorsqu'un champ électrique lui est appliqué.

5. Dispositif selon l'une quelconque des revendications 2 à 4, dans lequel chaque cellule de diffusion (120) est dans l'état de diffusion lorsqu'un champ électrique, d'un premier niveau, lui est appliqué et dans l'état transparent lorsqu'un champ électrique, d'un deuxième niveau, lui est appliqué ou lorsqu'aucun champ électrique ne lui est appliqué.

6. Dispositif selon l'une quelconque des revendications 1 à 5, dans lequel ledit au moins un matériau invité dichroïque présente une concentration comprise entre 10% et 15% en poids dudit mélange.

7. Dispositif selon l'une quelconque des revendications 1 à 6, dans lequel ladite couche de mélange constitué d'un matériau hôte à base de cristal liquide et d'au moins un matériau invité dichroïque est une couche mince d'épaisseur comprise entre 2 et 4 µm.

8. Dispositif selon l'une quelconque des revendications 1 à 7, dans lequel ladite couche de matériau à cristal liquide cholestérique est une couche mince d'épaisseur comprise entre 4 et 5 µm.

9. Dispositif selon l'une quelconque des revendications 1 à 8, dans lequel ladite couche de matériau à cristal liquide cholestérique comprend un dopant de type chiral ayant une concentration appartenant au groupe comprenant :
- une concentration sensiblement égale à 10% en poids de ladite couche ;
- une concentration sensiblement comprise entre 20% et 30% en poids de ladite couche.

10. Dispositif selon l'une quelconque des revendications 1 à 9, dans lequel ladite couche (115) de mélange comprise dans ladite au moins une cellule d'absorption de lumière (110) est à base de cristal liquide nématique à double fréquence.

11. Dispositif selon l'une quelconque des revendications 1 à 10, dans lequel ladite couche de matériau à cristal liquide cholestérique est à base de cristal liquide à double fréquence.

12. Dispositif d'obturation électro-optique **caractérisé en ce qu'**il comprend un ensemble d'au moins deux cellules optiques superposées comprenant une pluralité de cellules de diffusion de lumière chacune constituée d'une couche de matériau à cristal liquide cholestérique présentant une phase à orientation moléculaire conique focale

13. Dispositif selon la revendication 12, chaque cellule de diffusion coopère avec des moyens de commutation aptes à faire commuter ladite cellule de diffusion entre au moins deux états de fonctionnement : un état diffusant et un état transparent, et dans lequel chaque cellule de diffusion est dans l'état de diffusion lorsqu'un champ électrique, inférieur à une valeur seuil de champ électrique lui est appliqué et dans l'état transparent lorsqu'un champ électrique, supérieur à la valeur seuil de champ électrique, lui est appliqué ou lorsqu'aucun champ électrique ne lui est appliqué.

14. Système de visualisation stéréoscopique actif comprenant deux dispositifs d'obturation électro-optique, **caractérisé en ce que** chaque dispositif d'obturation électro-optique est selon l'une quelconque des revendications 1 à 11 ou 12 et 13.

## Patentansprüche

1. Elektrooptische Verschlussvorrichtung (100), **dadurch gekennzeichnet, dass** sie eine Anordnung aus mindestens zwei übereinander liegenden optischen Zellen umfasst, umfassend:
- mindestens eine Lichtabsorptionszelle (110), die aus einer Schicht (115) aus einem Gemisch aus Wirtsmaterial auf Flüssigkristallbasis und mindestens einem dichroitischen Gastmaterial besteht, und
- mindestens eine Lichtstreuzelle (120), die aus einer Schicht (125) aus cholesterischem Flüssigkristallmaterial besteht, das eine Phase mit fokal-konischer molekularer Ausrichtung aufweist.

2. Vorrichtung nach Anspruch 1, bei der jede Absorptionszelle mit ersten Umschaltmitteln (118) zusammenwirkt, die geeignet sind, die Absorptionszelle (110) zwischen mindestens zwei Betriebszuständen umschalten zu lassen, und zwar einem absorbierenden Zustand und einem durchlässigen Zustand, und bei der jede Streuzelle mit zweiten Umschaltmitteln (125) zusammenwirkt, die geeignet sind, die Streuzelle (120) zwischen mindestens zwei Betriebszuständen umschalten zu lassen, und zwar einem streuenden Zustand und einem durchlässigen Zustand.

3. Vorrichtung nach Anspruch 2, bei der jede Absorptionszelle (110) im absorbierenden Zustand ist, wenn kein elektrisches Feld an sie angelegt ist, und im durchlässigen Zustand, wenn ein elektrisches Feld an sie angelegt ist.

4. Vorrichtung nach Anspruch 2, bei der jede Absorptionszelle (110) im durchlässigen Zustand ist, wenn kein elektrisches Feld an sie angelegt ist, und im absorbierenden Zustand, wenn ein elektrisches Feld an sie angelegt ist.

5. Vorrichtung nach einem der Ansprüche 2 bis 4, bei der jede Streuzelle (120) im Streuzustand ist, wenn ein elektrisches Feld mit einer ersten Stärke an sie angelegt ist, und in einem durchlässigen Zustand, wenn ein elektrisches Feld mit einer zweiten Stärke an sie angelegt ist oder wenn kein elektrisches Feld an sie angelegt ist.

6. Vorrichtung nach einem der Ansprüche 1 bis 5, bei der das mindestens eine dichroitische Gastmaterial eine Konzentration zwischen 10 und 15 Gew.-% des Gemisches aufweist.

7. Vorrichtung nach einem der Ansprüche 1 bis 6, bei der die Gemischschicht, die aus einem Wirtsmaterial auf Flüssigkristallbasis und mindestens einem dichroitischen Gastmaterial besteht, eine dünne Schicht mit einer Dicke zwischen 2 und 4 µm ist.

8. Vorrichtung nach einem der Ansprüche 1 bis 7, bei der die Schicht aus cholesterischem Flüssigkristallmaterial eine dünne Schicht mit einer Dicke zwischen 4 und 5 µm ist.

9. Vorrichtung nach einem der Ansprüche 1 bis 8, bei der die Schicht aus cholesterischem Flüssigkristallmaterial ein chirales Dotierungsmittel in einer Konzentration umfasst, die der Gruppe angehört, welche umfasst:
- eine Konzentration von im Wesentlichen gleich 10 Gew.-% der Schicht;
- eine Konzentration von im Wesentlichen zwischen 20 und 30 Gew.-% der Schicht.

10. Vorrichtung nach einem der Ansprüche 1 bis 9, bei der die Gemischschicht (115), die in der mindestens einen Lichtabsorptionszelle (110) enthalten ist, auf der Basis von nematischem Dualfrequenz-Flüssigkristall ist.

11. Vorrichtung nach einem der Ansprüche 1 bis 10, bei der die Schicht aus cholesterischem Flüssigkristallmaterial auf der Basis von Dualfrequenz-Flüssigkristall ist.

12. Elektrooptische Verschlussvorrichtung, **dadurch gekennzeichnet, dass** sie mindestens zwei übereinander liegende optische Zellen umfasst, die eine Vielzahl von Lichtstreuzellen umfassen, von denen jede aus einer Schicht aus cholesterischem Flüssigkristallmaterial besteht, das eine Phase mit fokal-konischer molekularer Ausrichtung aufweist.

13. Vorrichtung nach Anspruch 12, jede Streuzelle mit Umschaltmitteln zusammenwirkt, die geeignet sind, die Streuzelle zwischen mindestens zwei Betriebszuständen umschalten zu lassen, und zwar einem streuenden und einem durchlässigen Zustand, und bei der jede Streuzelle im Streuzustand ist, wenn ein elektrisches Feld an sie angelegt ist, das unter dem Schwellenwert für das elektrisches Feld liegt, und im durchlässigen Zustand, wenn ein elektrisches Feld an sie angelegt ist, das über dem Schwellenwert für das elektrische Feld liegt, oder wenn kein elektrisches Feld an sie angelegt ist.

14. Aktives stereoskopisches Visualisierungssystem mit zwei elektrooptischen Verschlussvorrichtungen, **dadurch gekennzeichnet, dass** jede elektrooptische Verschlussvorrichtung die Merkmale eines der Ansprüche 1 bis 11 oder 12 und 13 aufweist.

## Claims

1. Electro-optical blocking device (100), **characterised in that** it comprises an assembly of at least two superposed optical cells comprising:
- at least one light absorption cell (110) consisting of a layer (115) of a mixture of liquid crystal host material and at least one dichroic guest material, and
- at least one light diffusion cell (120) consisting of a layer (125) of cholesteric liquid crystal material having a focal conic molecular orientation phase.

2. Device according to claim 1, wherein each absorption cell cooperates with first switching means (118) able to switch said absorption cell (110) between at least two operating states: an absorbing state and a transparent state, and wherein each diffusion cell cooperates with second switching means (125) able to switch said diffusion cell (120) between at least two operating states: a diffusing state and a transparent state.

3. Device according to claim 2, wherein each absorption cell (110) is in the absorbing state when no electric field is applied to it and in the transparent state when an electric field is applied to it.

4. Device according to claim 2, wherein each absorption cell (110) is in the transparent state when no electric field is applied to it and in the absorbing state when an electric field is applied to it.

5. Device according to any one of claims 2 to 4, wherein each diffusion cell (120) is in the diffusion state when an electric field of a first level is applied to it and in the transparent state when an electric field of a second level is applied to it or when no electric field is applied to it.

6. Device according to any one of claims 1 to 5, wherein said at least one dichroic guest material has a concentration of between 10% and 15% by weight of said mixture.

7. Device according to any one of claims 1 to 6, wherein said mixing layer comprising a liquid crystal host material and at least one dichroic guest material is a thin layer of thickness between 2 and 4 µm.

8. Device according to any one of claims 1 to 7, wherein said layer of cholesteric liquid crystal material is a thin layer of thickness between 4 and 5 µm.

9. Device according to any one of claims 1 to 8, wherein said cholesteric liquid crystal material layer comprises a chiral type dopant having a concentration belonging to the group comprising:
- a concentration substantially equal to 10% by weight of said layer;
- a concentration substantially between 20% and 30% by weight of said layer.

10. Device according to any one of claims 1 to 9, wherein said mixture layer (115) contained in said at least one light absorption cell (110) is based on dual frequency nematic liquid crystal.

11. Device according to any one of claims 1 to 10, wherein said layer of cholesteric liquid crystal material is based on dual frequency liquid crystal.

12. Electro-optical blocking device, **characterised in that** it comprises an assembly of at least two superposed optical cells comprising a plurality of light diffusion cells each consisting of a layer of cholesteric liquid crystal material having a focal conic molecular orientation phase.

13. Device according to claim 12, each diffusion cell cooperating with switching means able to switch said diffusion cell between at least two operating states: a diffusing state and a transparent state, and wherein each diffusion cell is in the diffusing state when an electric field lower than an electric field threshold value is applied to it, and in the transparent state when an electric field greater than the field threshold value electric is applied to it or when no electric field is applied to it.

14. Active stereoscopic vision system comprising two electro-optical blocking devices, **characterised in that** each electro-optical blocking device is according to any one of claims 1 to 11 or 12 and 13.
